# FASCICULE DE BREVET EUROPEEN

(11) **EP 2 234 038 B1**
(45) Date de publication et mention de la délivrance du brevet: **25.03.2015**
(21) Numéro de dépôt: 09156328.8
(22) Date de dépôt: 26.03.2009
(51) Int. Cl.: G06K 19/07

(54) **Transpondeur actif à très faible consommation électrique en mode de veille**
Aktiver Transponder mit sehr niedrigem Stromverbrauch im Standby-Modus
Active transponder with very low power consumption in standby mode

(43) Date de publication de la demande: 29.09.2010
(73) Titulaire: EM Microelectronic-Marin SA, 2074 Marin (CH)
(72) Inventeur: Kuratli, Christoph, 3013, Bern (CH)
(74) Mandataire: Surmely, Gérard

(56) Documents cités:
- US-B1- 6 593 845

## Description

L'invention concerne un transpondeur actif comprenant un circuit logique et un circuit d'entrée-sortie RF muni d'un amplificateur d'entrée. En particulier, l'invention concerne un tel transpondeur agencé de manière que, dans un mode de veille, seule une partie des circuits et/ou éléments de ce transpondeur soient actifs. Le transpondeur comprend donc des moyens d'activation des circuits et/ou éléments non actifs dans le mode de veille lors de la réception d'un signal d'interrogation provenant d'un lecteur.

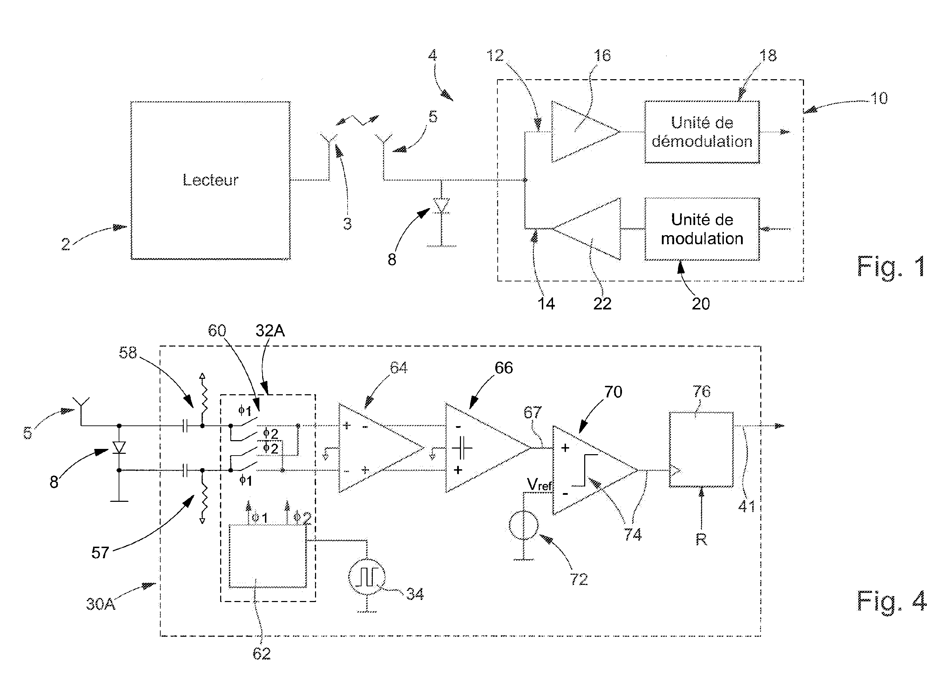

Un système de l'art antérieur équipé de transpondeurs du type décrit ci-avant est représenté à la figure 1. Ce système comprend un lecteur 2 équipé d'une antenne 3 de communication RF (Radio-Fréquence) et comprend ensuite au moins un transpondeur 4 également équipé d'une antenne 5 de communication RF. Ce transpondeur 4 comprend un détecteur 8 d'enveloppes de signaux modulés reçus par l'antenne 5, un circuit analogique d'entrée-sortie RF 10 ainsi qu'une partie logique (non représentée sur cette figure 1). La partie analogique frontale RF 10 définit essentiellement deux branches ou chemins 12 et 14 entre l'antenne et la partie logique du transpondeur. Le chemin d'entrée 12 traverse un amplificateur d'entrée 16 et ensuite une unité de démodulation 18 qui fournit un signal logique à la partie logique du transpondeur. Le chemin 14 entre la partie logique et l'antenne forme des moyens de réponse du transpondeur. Ce chemin 14 passe ainsi au travers d'une unité de modulation 20 et ensuite au travers d'un amplificateur de sortie 22.

Le transpondeur 4 est équipé de moyens de réveil qui sont associés à l'amplificateur d'entrée 16. Au moins cet amplificateur d'entrée est continuellement actif et participe donc au mode de veille. Lorsqu'il reçoit un signal d'une amplitude supérieure à une valeur de référence prédéterminée, cet amplificateur d'entrée active les niveaux supérieurs et/ou des parties du transpondeur qui sont inactives dans le mode de veille.

En général, les systèmes de communication du type décrit à la figure 1 communiquent à relativement haute fréquence, les plages de fréquence utilisées dans les systèmes avec transpondeurs actifs étant situées de plus en plus haut dans la gamme de fréquence, notamment dans le domaine des mégahertz et des gigahertz. Ainsi, l'amplificateur d'entrée 16 est un amplificateur à haute fréquence qui a généralement une bande passante relativement large propre au fait qu'il fonctionne à haute fréquence.

L'agencement de moyens de réveil dans le transpondeur actif 4 sert à diminuer sa consommation électrique de manière à augmenter sa longévité. Ainsi, il est prévu de limiter la partie du transpondeur devant être continuellement active pour assurer que le transpondeur soit activé lors de la réception d'un signal d'interrogation d'un lecteur. Dans le cas de l'art antérieur, au moins l'amplificateur d'entrée à haute fréquence 16 forme la partie alimentée en continu.

Le système de l'art antérieur décrit ci-avant présente divers inconvénients en relation avec la consommation électrique du transpondeur 4 lorsque ce dernier est dans un mode de veille. On peut identifier au moins deux causes engendrant une augmentation de la consommation électrique du transpondeur dans le mode de veille, à savoir premièrement le fait qu'un amplificateur d'entrée à haute fréquence présente une consommation électrique relativement importante et, deuxièmement, le fait que de tels amplificateurs à haute fréquence présentent généralement une bande passante assez large de sorte qu'ils sont susceptibles d'amplifier des signaux parasites reçus par l'antenne du transpondeur à des fréquences voisines de celles prévues pour le système concerné. Les systèmes sur le marché fonctionnent généralement dans des bandes de fréquence données. Ainsi, différents systèmes peuvent fonctionner à haute fréquence dans une même bande de fréquence relativement petite en valeur relative. L'amplificateur d'entrée 16 réagit aux signaux reçus dans sa bande passante, laquelle inclut donc des fréquences propres à d'autres systèmes. Il en résulte que des signaux parasites peuvent fréquemment réveiller le transpondeur. Ceci augmente évidemment la consommation électrique du transpondeur qui se réveille de manière intempestive avant de passer à nouveau en mode veille lorsqu'il a détecté que le signal reçu ne lui était pas destiné. US 6,593,845 B1 divulgue un transpondeur selon l'art antérieur.

Le but de l'invention est de résoudre les problèmes mentionnés ci-avant dans les systèmes de l'art antérieur en proposant un transpondeur actif à très faible consommation électrique en mode de veille et moins sujet à être réveillé par des signaux parasites ayant des fréquences voisines de la fréquence propre prévue pour le transpondeur actif en question.

A cet effet, le transpondeur actif selon l'invention comprend les caractéristiques selon la revendication 1.

Grâce aux caractéristiques du transpondeur actif selon l'invention, l'amplificateur d'entrée à haute fréquence est désactivé dans le mode de veille et cet amplificateur d'entrée est activé par une unité d'activation qui lui fournit un signal de réveil lorsqu'elle détecte en entrée un signal ayant une fréquence de modulation significative correspondant à une fréquence de modulation prédéterminée pour le système concerné. Cette unité d'activation, contrairement à l'amplificateur d'entrée, est agencée pour travailler à basse fréquence. En effet, le circuit changeur de fréquence ou circuit mélangeur et l'horloge interne prévue ont pour fonction de diminuer fortement ladite fréquence significative d'un signal d'interrogation propre au système à une basse fréquence de sorte que les moyens d'amplification prévus dans l'unité d'activation sont des moyens d'amplification à basse fréquence qui consomment relativement peu d'énergie. Ainsi, dans un transpondeur pouvant fonctionner à très haute fréquence, la partie du transpondeur restant activée dans un mode de veille est agencée pour fonctionner à basse fréquence et consommer ainsi moins d'énergie qu'un amplificateur d'entrée à haute fréquence associé à des moyens de réveil du transpondeur.

Selon un mode de réalisation particulier de l'invention, ledit filtre passe-bas et lesdits moyens d'amplification basse fréquence de l'unité d'activation sont prévus avec une bande passante étroite de sorte que seul des signaux modulés sensiblement à ladite fréquence de modulation sont amplifiés et engendrent un signal de réveil pour le transpondeur.

Grâce à ces caractéristiques supplémentaires combinées aux caractéristiques de l'unité d'activation mentionnées précédemment, il est possible de filtrer de manière très sélective les signaux entrant de sorte que seul un signal d'interrogation à la fréquence de modulation déterminée pour le système concerné pourra engendrer un signal d'activation du transpondeur. Ainsi, des signaux parasites ayant une fréquence différente de la fréquence propre du système considéré mais relativement proche de celle-ci dans une plage haute fréquence dans laquelle se trouve ladite fréquence propre pourront être aisément éliminés par un filtrage passe-bas qui permet d'être très sélectif en valeur absolue, contrairement à un amplificateur d'entrée fonctionnant à haute fréquence.

D'autres caractéristiques et avantages du transpondeur actif selon la présente invention ressortiront également de la description détaillée d'un mode de réalisation préféré de l'invention, donné à titre d'exemple nullement limitatif, cette description étant faite à l'aide du dessin annexé sur lequel :
- la figure 1, déjà décrite, représente schématiquement un système de communication entre un lecteur et un transpondeur de l'art antérieur;
- la figure 2 représente partiellement le circuit électronique d'un transpondeur actif selon un mode préféré de l'invention;
- la figure 3A représente une séquence de bits typiques formant le préambule d'un signal d'interrogation intervenant dans un système auquel le transpondeur selon l'invention est destiné;
- la figure 3B est un graphe montrant le spectre de fréquence résultant du signal de la figure 3A;
- la figure 3C montre le décalage en fréquence opéré par l'unité d'activation du transpondeur selon l'invention;
- la figure 4 montre une variante préférée de réalisation du circuit électronique constituant l'unité d'activation du transpondeur selon le mode de réalisation de la figure 2.

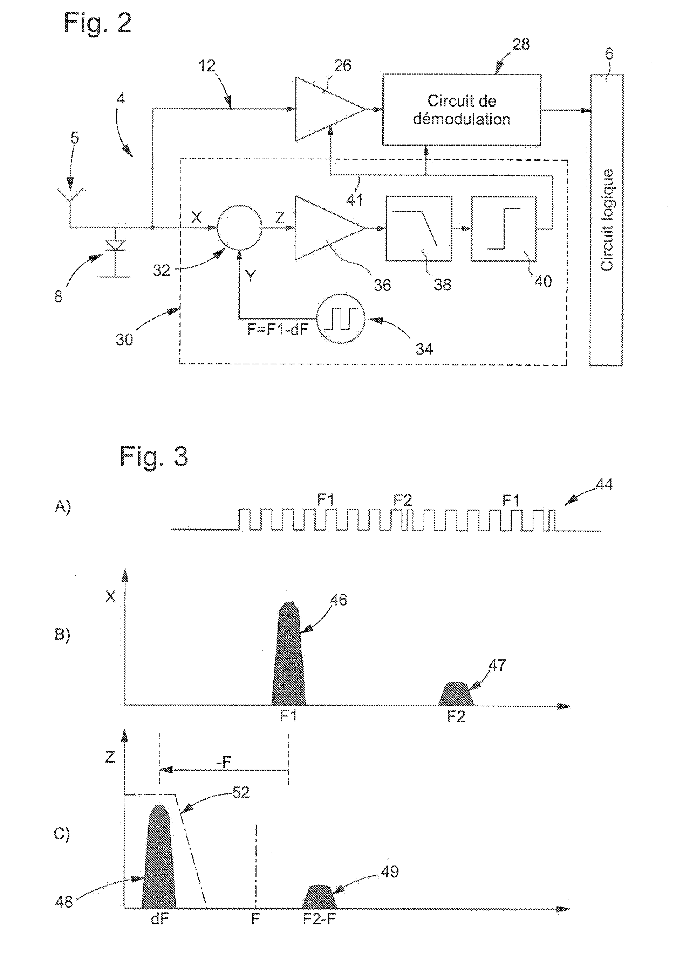

A la figure 2 est représenté un mode de réalisation préféré d'un transpondeur actif selon la présente invention. Seuls les circuits de ce transpondeur actif nécessaires à la compréhension de la présente invention sont représentés à cette figure 2. Le transpondeur actif comprend un circuit logique 6 et un circuit d'entrée-sortie RF 4. Le circuit d'entrée-sortie est formé par un amplificateur d'entrée 26 agencé entre un détecteur 8 d'enveloppe du signal reçu par une antenne 5 et par une unité de démodulation du signal entrant qui fournit un signal logique au circuit logique 6. L'amplificateur d'entrée et également dans cette variante préférée le circuit de démodulation présentent chacun une entrée sur laquelle un signal d'activation peut être fourni pour activer ou désactiver l'amplificateur d'entrée 26 et respectivement le circuit de démodulation 28. Dans le cadre de la présente invention, un tel signal d'activation ou signal de réveil est appliqué à l'amplificateur d'entrée et au circuit 28 par une unité d'activation 30 dont la consommation est minimisée.

L'unité d'activation 30 comprend selon l'invention un circuit changeur de fréquence ou mélangeur 32 qui reçoit à son entrée X un signal d'enveloppe fourni par le détecteur 8 d'enveloppe d'un signal reçu par l'antenne 5. Le circuit 32 reçoit également à son entrée Y un signal d'horloge généré par une horloge interne 34. La fréquence F du signal d'horloge est prévue avec une valeur F égal à F1 - dF, F1 étant une fréquence de modulation significative d'un signal d'interrogation ou d'une partie d'un tel signal, notamment de son préambule, propre au système RF auquel le transpondeur actif est destiné. Le symbole dF correspond à une fréquence de petite valeur définissant une basse fréquence. Ainsi, la fréquence d'horloge F est différente mais proche de la fréquence de modulation F1 propre au système considéré. Ceci permet de diminuer la fréquence de modulation F1 d'une valeur de F de sorte que la fréquence du signal fourni à la sortie Z du circuit 32 présente la fréquence centrale dF comme cela est représenté à la figure 3.

La figure 3A montre une séquence de bits du préambule 44 d'un signal d'interrogation classique dans un système de communication du type de la présente invention. Le signal est modulé en fréquence et présente par la répétition majoritaire d'un même bit une fréquence propre significative F1. La figure 3B montre le spectre des fréquences du signal à l'entrée X du circuit changeur de fréquence ou mélangeur avec un pic 46 centré en F1 et un deuxième petit pic 47 centré à la fréquence F2 qui correspond au double de la fréquence F1. La figure 3C représente le spectre des fréquences du signal de sortie Z du circuit 32. Comme mentionné précédemment, les fréquences F1 et F2 sont diminuées d'une valeur correspondant à la fréquence F du signal d'horloge. Ainsi, le spectre de fréquences du signal de sortie Z comprend un signal basse fréquence 48 formé par un pic centré sensiblement sur la fréquence dF et un petit signal 49 à la fréquence F2 - F. Le signal Z est ensuite fourni à des moyens d'amplification basse fréquence 36 puis à un filtre passe-bas 38 qui sélectionne en transmission une bande de fréquence relativement étroite autour du signal 48, comme cela est représenté par la courbe 52 sur le graphe de la figure 3C. Le signal basse fréquence fourni par le circuit changeur de fréquence est donc amplifié et filtré par les unités 36 et 38 à basse fréquence.

Finalement, le signal basse fréquence amplifié et filtré est fourni à une unité 40 agencée pour fournir un signal logique 41 constituant un signal de réveil ou d'activation pour l'amplificateur d'entrée 26 et également pour le circuit de modulation 28. L'unité 40 est agencée de manière que seul un signal ayant une amplitude significative, c'est-à-dire généralement supérieur à une certaine valeur donnée, engendre un signal de réveil. Cette situation se présente lorsque le transpondeur actif reçoit en entrée, c'est-à-dire sur son antenne 5, un signal d'interrogation d'un lecteur ayant une fréquence de modulation significative F1. Le signal basse fréquence 48 fournit en sortie du circuit 32 présente donc une fréquence sensiblement égale à la différence dF entre la fréquence de modulation F1 du signal d'interrogation et la fréquence F du signal d'horloge (dF = F1 - F).

Dans une variante préférée, de manière à écarter un maximum de signaux parasites potentiels, le filtre passe-bas 38 et/ou les moyens d'amplification 36 sont prévus avec une bande passante étroite de sorte que seuls des signaux modulés sensiblement à ladite fréquence de modulation F1 sont amplifiés et peuvent engendrer le signal de réveil 41.

Une variante préférée d'agencement de l'unité d'activation 30A est représentée à la figure 4. Cette variante se caractérise par une très basse consommation électrique (ultra faible puissance) résultant en particulier de l'implémentation d'un circuit changeur de fréquence 32A du type passif.

L'unité d'activation 30A comprend dans sa partie d'entrée des moyens de couplage AC 57 et 58 pour éliminer une éventuelle composante DC du signal d'enveloppe fourni par le détecteur d'enveloppe 8. Le signal AC résultant est alors fourni au circuit changeur de fréquence 32A qui est formé seulement d'interrupteurs 60 (dans le cas présent quatre interrupteurs commandés deux à deux par des signaux logiques φ1 et φ2). Ces signaux logiques sont fournis par un générateur 62 de signaux de phase sans recouvrement "(non-overlapping clock-phase generator)". Le circuit 32A est du type passif et consomme très peu d'énergie pour fonctionner. Lorsque le signal φ1 est dans un état logique haut ("1 "), le signal d'enveloppe passe directement vers un premier amplificateur 64. Lorsque le signal logique φ2 est dans son état haut ("1 "), le signal d'enveloppe est inversé pour être fourni au premier amplificateur 64. Le signal passe ensuite par un deuxième étage d'amplification 66 qui amplifie le signal et enlève une partie DC présente, le cas échéant, dans le signal sortant du premier amplificateur 64. Le signal 67 sortant des moyens d'amplification 64 et 66 est fourni à une première entrée d'un comparateur 70 dont la seconde entrée est reliée à une source de tension 72 fournissant une tension de référence Vref. Ce comparateur 70 engendre un signal de détection logique 74 lorsque l'amplitude du signal 67 est supérieure à la valeur de référence définie par la tension de référence Vref.

Comme le signal de détection fourni en sortie du comparateur 70 peut être de durée relativement courte, une bascule (flip-flop) 76 est prévue. Cette bascule conserve ainsi un signal logique haut, c'est-à-dire un signal de réveil 41 actif jusqu'à la réception d'un signal d'initialisation R. On remarquera que les deux étages d'amplification 64 et 66 forment des moyens d'amplification basse fréquence et également un filtre basse fréquence. Le comparateur 70 est situé en aval des deux étages d'amplification 64 et 66. On notera encore que le générateur de signaux logiques 62 est relié à l'horloge interne 34 qui sert à former les deux signaux φ1 et φ2.

Le signal de réveil 41 est appliqué simultanément à l'amplificateur d'entrée 26 et au circuit de démodulation 28 de la figure 2. La consommation électrique dans le mode de veille est ainsi minimisée au maximum et le circuit d'activation de la branche d'entrée 12 est très sélectif en fréquence.

## Revendications

1. Transpondeur actif comprenant un circuit logique (6) et un circuit d'entrée-sortie RF (4), ce circuit d'entrée-sortie étant formé par un amplificateur d'entrée (26) agencé entre un détecteur (8) d'enveloppe d'un signal recevable par une antenne du transpondeur et un circuit de démodulation (28) de ce signal formant également ledit circuit d'entrée-sortie, ce transpondeur étant **caractérisé en ce qu'**il comprend une unité d'activation (30; 30A) dudit amplificateur d'entrée qui est formée d'un circuit changeur de fréquence ou mélangeur (32; 32A) qui est adapté pour recevoir en entrée un signal d'enveloppe dudit signal d'antenne et un signal d'horloge générée par une horloge interne (34) à une fréquence d'horloge (F) différente mais proche d'une fréquence de modulation (F1) d'un signal d'interrogation d'un système RF auquel le transpondeur est destiné et qui fournit en sortie, lorsqu'il reçoit en entrée ledit signal d'interrogation, un signal basse fréquence (48) dont la valeur est sensiblement égale à la différence entre ladite fréquence de modulation et ladite fréquence d'horloge, ladite unité d'activation comprenant en outre un filtre passe-bas (38) et des moyens d'amplification basse fréquence (36) pour amplifier ledit signal basse-fréquence, ladite unité d'activation fournissant un signal de réveil (41) audit amplificateur d'entrée lorsqu'elle reçoit un signal d'enveloppe ayant ladite fréquence de modulation et une amplitude suffisamment grande.

2. Transpondeur actif selon la revendication 1, **caractérisé en ce que** ledit filtre passe-bas et lesdits moyens d'amplification basse-fréquence sont prévus avec une bande passante étroite de sorte que seuls des signaux modulés sensiblement à ladite fréquence de modulation sont amplifiés et engendrent un signal de réveil.

3. Transpondeur actif selon la revendication 1 ou 2, **caractérisé en ce qu'**il comprend en aval dudit filtre passe-bas et desdits moyens d'amplification basse-fréquence, un comparateur (70) fournissant en sortie un signal logique de détection (74).

4. Transpondeur actif selon l'une des revendications précédentes, **caractérisé en ce que** ladite unité d'activation comprend dans sa partie d'entrée des moyens de couplage AC (57, 58) pour éliminer une éventuelle composante DC dudit signal d'enveloppe.

5. Transpondeur actif selon l'une des revendications précédentes, **caractérisé en ce que** ladite unité d'activation (30A) comprend dans sa partie de sortie une bascule (76) qui reçoit en entrée ledit signal logique de détection.

6. Transpondeur actif selon l'une des revendications précédentes, **caractérisé en ce que** ledit circuit changeur de fréquence ou mélangeur (32A) est un circuit passif formé d'interrupteurs (60) commandés par un générateur d'impulsions (62) relié à ladite horloge interne.

7. Transpondeur actif selon l'une des revendications précédentes, **caractérisé en ce que** ledit signal de réveil est également fourni audit circuit de démodulation (28) de manière à activer ce dernier simultanément audit amplificateur d'entrée.

## Patentansprüche

1. Aktiver Transponder, der eine Logikschaltung (6) und eine Eingangs/Ausgangs-HF-Schaltung (4) umfasst, wobei diese Eingangs/Ausgangs-Schaltung durch einen Eingangsverstärker (26) gebildet ist, der zwischen einen Hüllkurvendetektor (8) für ein von einer Antenne des Transponders empfangbares Signal und eine Demodulationsschaltung (28) für dieses Signal, die ebenfalls die Eingangs/Ausgangs-Schaltung bildet, geschaltet ist, wobei dieser Transponder **dadurch gekennzeichnet** ist, dass er eine Einheit (30; 30A) zum Aktivieren des Eingangsverstärkers umfasst, der durch eine Frequenzänderungsschaltung oder einen Mischer (32; 32A) gebildet ist, die bzw. der dafür ausgelegt ist, am Eingang ein Hüllkurvensignal des Antennensignals sowie ein Taktsignal zu empfangen, das durch einen internen Taktgeber (34) mit einer Taktfrequenz (F) erzeugt wird, das verschieden von, jedoch nahe bei einer Modulationsfrequenz (F1) eines Abfragesignals eines HF-Systems liegt, für das der Transponder bestimmt ist und das am Ausgang dann, wenn es am Eingang das Abfragesignal empfängt, ein Niederfrequenz signal (48) liefert, dessen Wert im Wesentlichen gleich der Differenz zwischen der Modulationsfrequenz und der Taktfrequenz ist, wobei die Aktivierungseinheit außerdem ein Tiefpassfilter (38) und Niederfrequenz-Verstärkungsmittel (36) zum Verstärken des Niederfrequenzsignals umfasst, wobei die Aktivierungseinheit an den Eingangsverstärker ein Wecksignal (41) liefert, wenn sie ein Hüllkurvensignal empfängt, das die Modulationsfrequenz und eine ausreichend große Amplitude besitzt.

2. Aktiver Transponder nach Anspruch 1, **dadurch gekennzeichnet, dass** das Tiefpassfilter und die Niederfrequenz-Verstärkungsmittel mit einem schmalen Durchlassband versehen sind, derart, dass nur Signale, die im Wesentlichen mit der Modulationsfrequenz moduliert sind, verstärkt werden und ein Wecksignal erzeugen.

3. Aktiver Transponder nach Anspruch 1 oder 2, **dadurch gekennzeichnet, dass** er dem Tiefpassfilter und den Niederfrequenz-Verstärkungsmitteln nachgeschaltet einen Komparator (70) umfasst, der am Ausgang ein logisches Detektionssignal (74) liefert.

4. Aktiver Transponder nach einem der vorhergehenden Ansprüche, **dadurch gekennzeichnet, dass** die Aktivierungseinheit in ihrem Eingangsabschnitt Wechselspannungs-Kopplungsmittel (57, 58) umfasst, um eine eventuelle Gleichspannungskomponente des Hüllkurvensignals zu beseitigen.

5. Aktiver Transponder nach einem der vorhergehenden Ansprüche, **dadurch gekennzeichnet, dass** die Aktivierungseinheit (30A) in ihrem Ausgangsabschnitt eine Kippschaltung (76) umfasst, die am Eingang das logische Detektionssignal empfängt.

6. Aktiver Transponder nach einem der vorhergehenden Ansprüche, **dadurch gekennzeichnet, dass** die Frequenzänderungsschaltung oder der Mischer (32A) eine passive Schaltung ist, die durch Unterbrecher (60) gebildet ist, die durch einen mit dem internen Taktgeber verbundenen Impulsgenerator (62) gesteuert werden.

7. Aktiver Transponder nach einem der vorhergehenden Ansprüche, **dadurch gekennzeichnet, dass** das Wecksignal auch an die Demodulationsschaltung (28) geliefert wird, derart, dass diese Letztere gleichzeitig mit dem Eingangsverstärker aktiviert wird.

## Claims

1. Active transponder including a logic circuit (6) and an RF input-output circuit (4), wherein said input-output circuit is formed by an input amplifier (26) arranged between an envelope detector (8) for a signal which can be received by an antenna of the transponder and a demodulation circuit (28) for said signal that also forms said input-output circuit, said transponder being **characterized in that** it includes an activation unit (30; 30A) for said input amplifier, which is formed of a frequency changer or mixer circuit (32; 32A), which is arranged for receiving as input an envelope signal of said antenna signal and a clock signal generated by an internal clock (34) at a clock frequency (F) that is different from, but close to a modulation frequency (F1) of an interrogation signal of an RF system for which the transponder is intended, and which supplies as output, when it receives said interrogation signal as input, a low frequency signal (48), whose value is approximately equal to the difference between said modulation frequency and said clock frequency, said activation unit also including a low pass filter (38) and low frequency amplifying means (36) for amplifying said low frequency signal, and said activation unit supplying a wake up signal (41) to said input amplifier when it receives an envelope signal having said modulation frequency and a sufficiently large amplitude.

2. Active transponder according to claim 1, **characterized in that** said low pass filter and said low frequency amplifying means are provided with a narrow bandwidth such that only signals modulated approximately at said modulation frequency are amplified and generate a wake up signal.

3. Active transponder according to claim 1 or 2, **characterized in that**, downstream of said low pass filter and said low frequency amplifying means, it includes a comparator (70) that supplies a logic detection signal (74) as output.

4. Active transponder according to any of the preceding claims, **characterized in that** the input part of said activation unit includes AC coupling means (57, 58) for removing any DC component from said envelope signal.

5. Active transponder according to any of the preceding claims, **characterized in that** the output part of said activation unit (30A) includes a flip-flop (76), which receives said logic detection signal as input.

6. Active transponder according to any of the preceding claims, **characterized in that** said frequency changer or mixer circuit (32A) is a passive circuit formed of switches (60) controlled by a pulse generator (62) connected to said internal clock.

7. Active transponder according to any of the preceding claims, **characterized in that** said wake up signal is also supplied to said demodulation circuit (28) so as to activate said circuit simultaneously with said input amplifier.
